# EUROPEAN PATENT SPECIFICATION

(11) **EP 2 567 130 B1**
(45) Date of publication and mention of the grant of the patent: **09.04.2014**
(21) Application number: 11718971.2
(22) Date of filing: 27.04.2011
(51) Int. Cl.: F16K 31/00, G05D 23/13

(54) **THERMOSTATIC VALVE WITH IMPROVED PRESSURE BALANCING**
THERMOSTATISCHES VENTIL MIT VERBESSERTEM DRUCKAUSGLEICH
VANNE THERMOSTATIQUE AVEC COMPENSATION DE PRESSION AMÉLIORE

(30) Priority: 04.05.2010 IT MI20100779
(43) Date of publication of application: 13.03.2013
(73) Proprietor: Garef Di Bacchetta Roger, 28045 Invorio (NO) (IT)
(72) Inventor: BIAGGI, Fabrizio, I-28024 Gozzano (NO) (IT); BACCHETTA, Roger, I-28045 Invorio (NO) (IT)
(74) Representative: Zanoli, Enrico
(86) International application number: PCT/EP2011/056653
(87) International publication number: WO 2011/138201

(56) References cited:
- EP-A1- 1 248 173
- EP-A2- 0 947 902
- WO-A1-2006/126222
- GB-A- 1 388 372

## Description

The present invention relates to a thermostatic valve for mixing fluids, with a pressure balance, capable of guaranteeing a precise, reliable delivery of the fluid at the desired temperature, being advantageous to manufacture and simple to install.

Thermostatic valves are devices housed inside thermostatic mixers. These devices are used to manage fluid obtained by mixing two or more fluids with differing temperature and pressure characteristics. In particular, they enable regulation of the temperature of the mixed fluid, maintaining it constant even in the event of a sudden drop in the pressure or variation in the temperature of one of the fluids being mixed. Thermostatic valves are commonly used in the bathroom fittings sector. They are used for their practicality, safety, comfort and the energy savings that they can achieve.

Thermostatic valves are composed of a heat-sensitive element, a heat regulation device and only in some cases a pressure balancing device. The heat-sensitive element detects the temperature of the mixed fluid obtained and interacts with the heat regulation device. The latter allows the delivery of fluid mixed to a pre-set temperature. Lastly, the pressure balancing device equalises the outlet pressure of the fluids to be mixed under non-uniform conditions. Said thermostatic valves are generally housed inside thermostatic mixers consisting of a single cast metallic body. Inside this body, the various fluids to be mixed are made to converge at the specially provided openings made on the thermostatic valve. The mixed fluid exiting said valve is then channelled towards a flow regulation device enabling its use by the user.

There are several known types of thermostatic valves. They have temperature detection in common, which is carried out by heat-sensitive elements. Mixing is achieved using different methods depending on the type of valve used. Certain types of valve perform regulation by varying specially provided holes for the passage of the fluids to be mixed by means of the rotation of internal elements around the axis of symmetry. Other valves perform temperature regulation by means of devices specially provided for the purpose, placed inside the valve itself. These devices vary the holes for the passage of the fluid by means of the translation of the elements along the valve. The temperature of the fluid delivered depends, however, not only on the temperature of the fluids used for mixing, but also on the pressures with which said fluids being mixed reach the valve. The combination of variable temperature and pressure for the different fluids to be mixed highlights the difficulty of delivering the mixed fluid at the requested temperature, and above all at a constant temperature.

Currently, certain typical technical solutions intended to solve this problem involve the creation of a chamber in which to house a heat-sensitive element, with a portion for reading the temperature placed at the outlet of the mixed fluid. Pressure balancing and regulation of the temperature of the mixed fluid is achieved by means of two ceramic discs: one of the discs moves with respect to the other, and depending on its angular position, makes it possible to regulate the flow cross-section for fluids entering at different temperatures and for the mixed outlet fluids. This solution presents certain problems because the means for selecting the temperature and flow rate of the outlet mixed fluid are on the same control. Moreover, a further problem relates to the instability of the temperature of the mixed fluid caused by the differing conditions in which the fluids to be mixed reach the valve. Consequently, these problems create difficulties in regulating the outlet temperature; furthermore, the constant difficulty in regulating the temperature generates energy wastage and problems relating to safety caused by possible scalding in the event of a sudden lack of cold fluid in the system. Further solutions include the use of a heat-sensitive element, made using a rapidly expanding and contracting material, which by means of a mechanical connection operates a heat regulation device. This heat regulation device is made using a piston slide or chamber and enables the fluid inlet and outlet holes to be varied. These solutions also have a problem of instability of the temperature of the mixed fluid if there is a variation in the pressure of the fluid to be mixed.

Further solutions include the use of thermostatic valves with a pressure balancing device for the fluids entering the valve. These solutions solve the problem related to the stability of the temperature of the exiting mixed fluid, but present other problems related to complexity. In fact, the construction of these valves requires numerous elements resulting in complexity of assembly and an increase in the cost of production. Moreover, a further disadvantage of these solutions is the valve elements are subjected to fatigue wear caused by the continuous reciprocal movements to which said elements are subject; wear becomes even more marked when the operating pressures of the fluids are high.

EP0569437 describes a device for regulating the mixing of fluids at different temperatures. This regulation is achieved by means of a valve consisting of a piston chamber that balances the pressure of the two liquids, and of a thermostatic element that regulates the temperature to the desired level. The device features only elements that translate axially; the pressure and temperature regulation functions are performed by different elements (a piston chamber for the pressure and a thermostatic element for the temperature).

The regulation device is essentially composed of two chambers, one inside the other, which perform the two regulation functions: the inner chamber balances the pressures, while the outer chamber regulates the temperature.

In an alternative embodiment, the device is composed of two elements fixed one inside the other but the piston, used for balancing the pressures, consists of a single element with a central O-ring fixed into a specially provided groove. The outer chamber for temperature regulation also consists of a single element.

The device described has the disadvantage of placing the thermostatic element at the top of the valve: this position does not allow a precise reading of the outlet temperature. The mixed liquid actually needs to travel a greater distance to reach the user, with a resulting variation in temperature compared to that read by the thermostatic element. A further disadvantage is the placement of the balancing spring on the outside of the valve body, which has two negative effects. The first negative effect can be seen during initial assembly or replacement of the valve body; it is difficult to regulate the pre-loading of the spring for it to work correctly according to the chosen temperature. Furthermore, insertion of the spring inside the mixer body requires a specially provided seat to house it: this leads to considerable difficulties in the production of the mixer bodies. These are cast, but installation of the spring requires further working to eliminate swarf and improve the seat for the spring to fit into.

EP1248173 describes a thermostatically controlled mixing valve in which a thermostatic element is placed at the end of the valve near the liquid outflow, in contact with the mixed water. Water mixing is performed by opening or closing portions of said valve by axial movement of an internal control chamber mechanically fixed with the expansion element of the thermostatic element.

The device described has the disadvantage of performing a thermoregulation without a right pressure regulation. Said device is not provided with a real pressure control system and, consequently, the thermoregulation is subject to the different pressure of the hot and cold water flows to be mixed.

A thermostatic valve of this type is known from the document GB 1388372.

It would therefore be desirable to have a thermostatic valve with a pressure balance that enables a reliable, precise outlet temperature to be maintained. It would also be desirable for this valve to be advantageously installable, i.e. for said valve to allow quick, simple mounting for initial installation or for subsequent replacements. It would be further desirable to have a thermostatic valve with pressure balance that is advantageous to manufacture and assemble, such that costs are reduced for production and assembly with other system components.

The object of this invention is therefore to provide a thermostatic valve with pressure balance that can enable the thermostatic element to take a reading of the temperature of the mixed liquid as close as possible to the user.

A further object of this invention is to provide a thermostatic valve with pressure balance that is easy to mount for initial installation or replacement.

Yet another object of this invention is to provide a thermostatic valve with pressure balance that can reduce the production costs of the valve itself and of the thermostatic mixer containing it.

According to the present invention, the above-mentioned objects are achieved by a thermostatic valve for mixing fluids, comprising:
- a casing, provided with outlet slots and coupled with thermoswitch means;
- a heat-sensitive element, provided with a piston;
- a first elastic sealing means;
- a second elastic balancing means;
- a heat-regulation device;
said thermostatic valve being characterised in that:
said casing is a single-piece element in which said heat-regulation device is fixedly housed;
said heat-sensitive element is housed in said casing, in the portion opposite to said thermoswitch means;
said first elastic sealing means is interposed between said heat-sensitive element and said casing;
said second elastic balancing means is housed in said casing, in the portion opposite to said heat-sensitive element;
said heat-regulation device is provided with a pressure balancing device and comprises at least two flow chambers for fluids; said flow chambers being placed in diametrically opposed positions with respect to the axis of symmetry of said heat-regulation device and in correspondence with said outlet slots of said casing.

With a thermostatic valve for mixing fluids according to the present invention, we have a device consisting of a single block for the regulation of the temperature of the mixed fluid in relation to the pressure balancing of the inlet fluids. Regulation is achieved by detecting the temperature of the mixed outlet fluid in the inner portion of the valve near the point where the mixed fluid will be used. The thermostatic valve for mixing fluids object of the present invention also makes it possible to obtain a device for which the assembly cost and installation cost are minimal. Lastly, the use of thermostatic valves according to the present invention is advantageous for the construction of the thermostatic mixers in which said valves must be housed: the complexity of the mixers is reduced and consequently their production costs is minimised.

These and other features and advantages of the present invention will become more apparent from the following detailed description of preferred embodiments thereof, which are illustrated by way of non-limitative example in the accompanying drawings, in which:

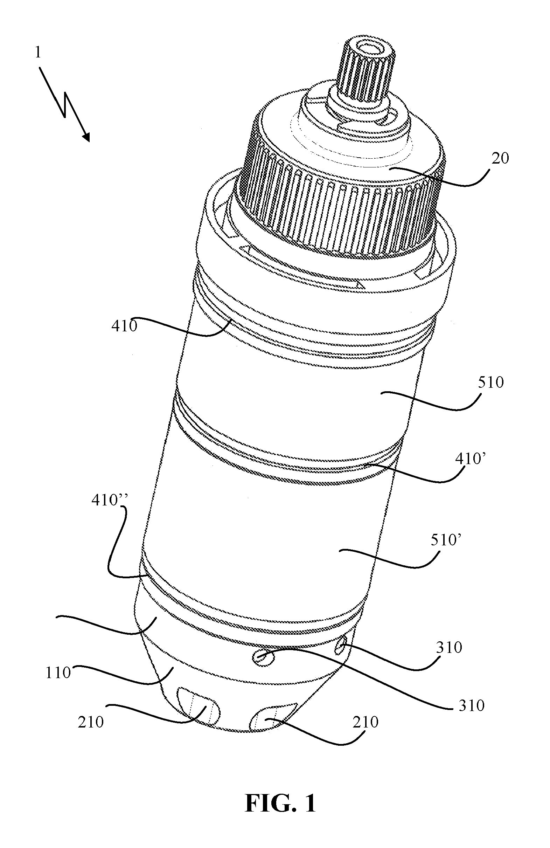

- figure 1 shows a perspective view of an embodiment of the thermostatic valve for mixing fluids according to the present invention;

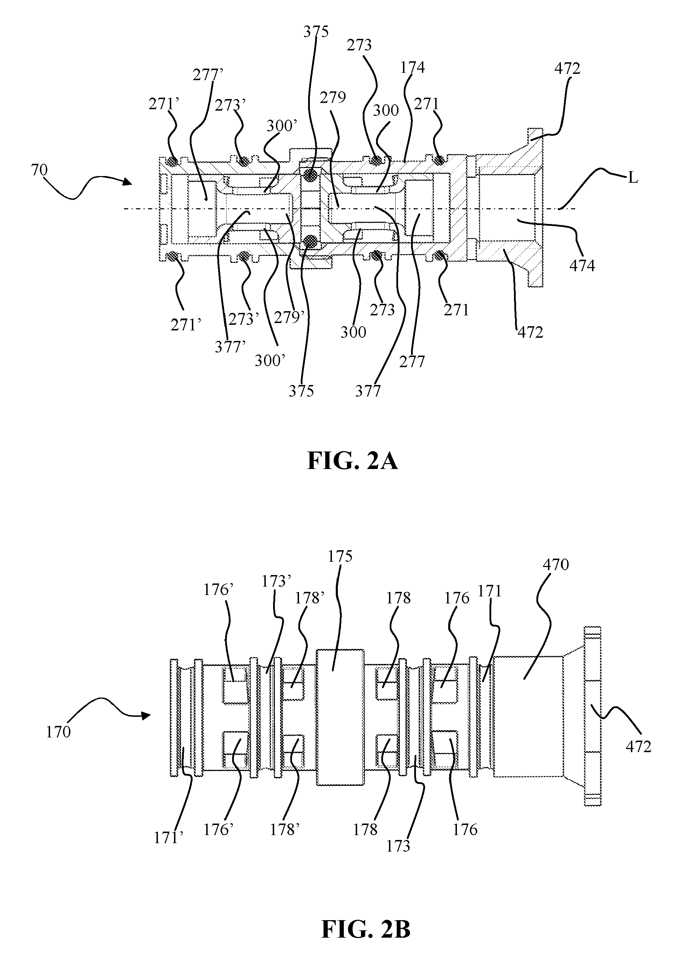

- figure 2A shows a cross-section view of an embodiment of the pressure balancing device contained in the thermostatic valve for mixing fluids in the embodiment illustrated in figure 1;
- figure 2B shows a plan view of an embodiment of the structure of the pressure balancing device in the embodiment illustrated in figure 2A;

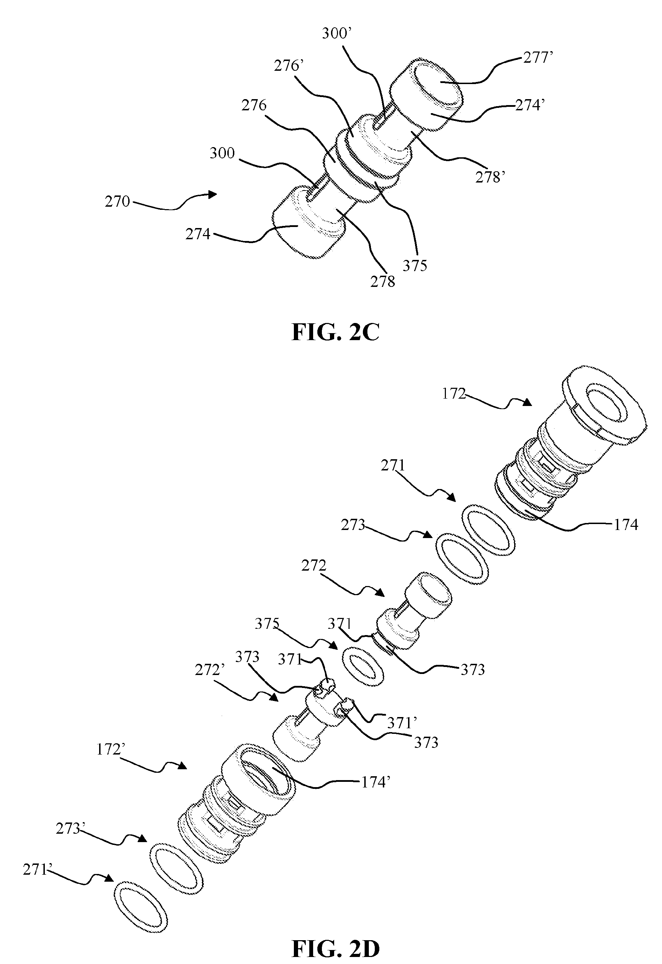

- figure 2C shows a perspective view of an embodiment of the piston device contained in the structure of the pressure balancing device in the embodiment illustrated in figure 2B;
- figure 2D shows an exploded perspective view of the pressure balancing device in the embodiment illustrated in figure 2A;

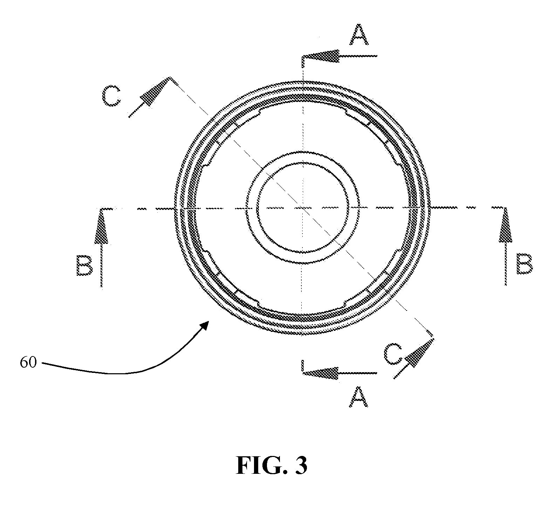

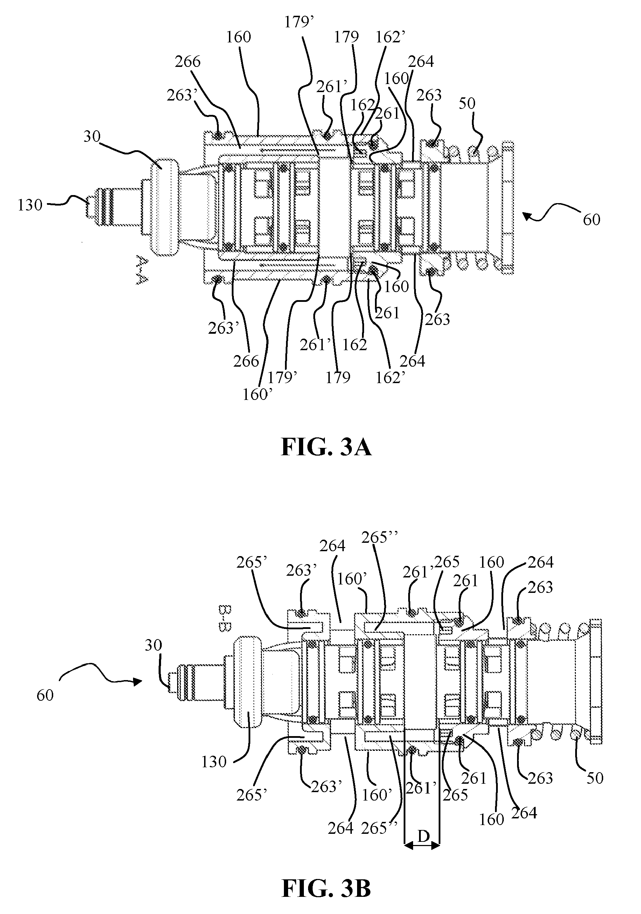

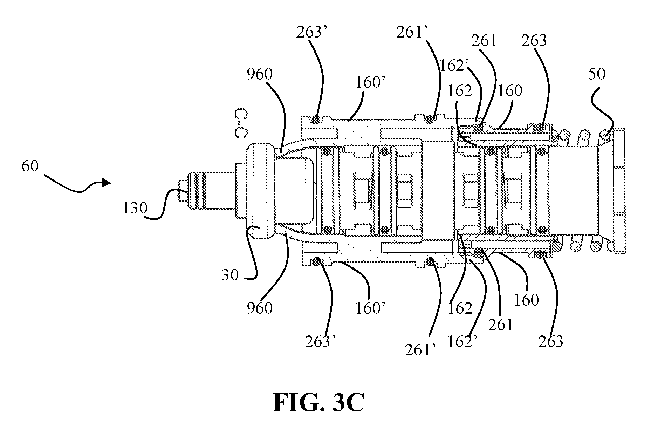

- figure 3 shows an overhead plan view of the heat regulation device contained in the embodiment illustrated in figure 1;
- figure 3A shows a cross-section view in the direction A-A of the device illustrated in figure 3;
- figure 3B shows a cross-section view in the direction B-B of the device illustrated in figure 3;
- figure 3C shows a cross-section view in the direction C-C of the device illustrated in figure 3;

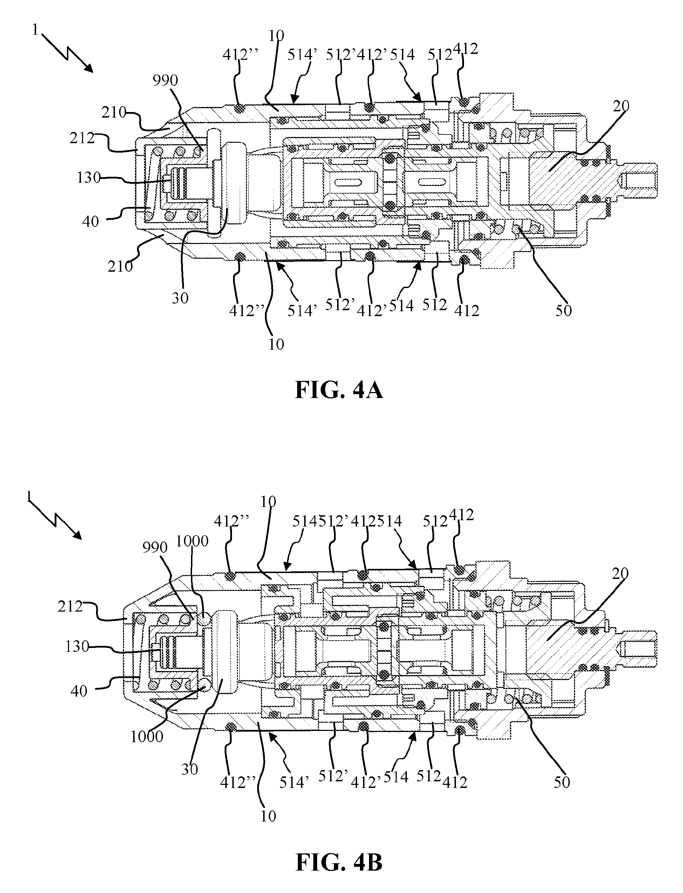

- figure 4A shows a cross-section view in the direction D-D of the thermostatic valve for mixing fluids in the embodiment illustrated in figure 1;
- figure 4B shows a cross-section view in the direction E-E of the thermostatic valve for mixing fluids in the embodiment illustrated in figure 1;

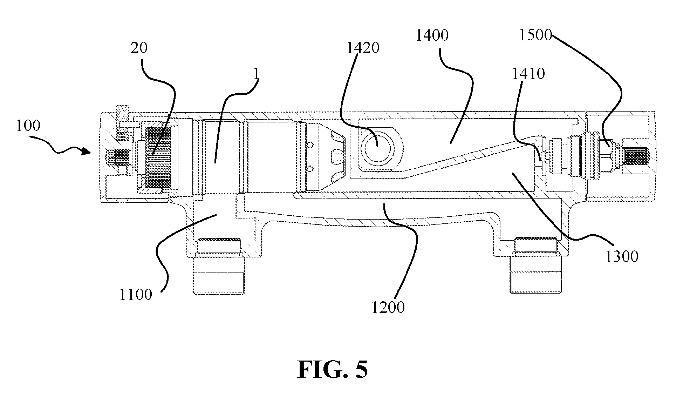

- figure 5 shows a partial cross-section view of an embodiment of the thermostatic mixer containing a thermostatic valve for mixing fluids in the embodiment illustrated in figure 1.

With reference to the figures described, the thermostatic valve for mixing fluids 1, according to the present invention, comprises a hollow cylindrical casing 10 coupled with thermoswitch means 20 at one end. The term 'thermoswitch means' used in the present invention refers to devices that enable temperature selection by the operator. The casing 10 has a truncated conical portion 110 at the end opposite said thermoswitch means 20; the truncated conical end 110 is also provided with outlet slots 210 and a hollow portion 212 on the inside. In the central portion of the casing 10, at the truncated conical end 110, there are openings 310: these allow the insertion of coupling means 1000 for connection of the heat-sensitive element 30 to said casing 10, as described in detail below. The central portion of the casing 10 is also provided with a first groove 410, a second groove 410' and a third groove 410". These grooves support the housing respectively of a first O-ring seal 412, a second O-ring seal 412' and a third O-ring seal 412". Grooves 410, 410' and 410" allow the division of the casing 10 into a first central portion 510 and a second central portion 510'. The first central portion 510 is interposed between the first groove 410 and the second groove 410'; the second central portion 510' is interposed between the second groove 410' and the third groove 410". On central portions 510, 510', there are openings 512, 512' to allow the inlet of fluids. On said central portions 510, 510' there are also housed respectively a first filtering means 514 and a second filtering means 514', both of which are circular in shape and are big enough to enable the complete coverage of the central portions 510, 510'. The structure of the casing thus described enables the watertight separation of the central portions 510, 510' when the thermostatic valve for mixing fluids 1 is inserted into the thermostatic mixer 100, as described in detail below.

The thermostatic valve for mixing fluids 1 comprises a heat regulation device 60, housed inside the casing 10. When the thermostatic valve 1 is in operative condition, the casing 10 is fixed with respect to said heat-regulation device 60. This device 60 comprises a hollow cylindrical structure that can be easily inserted into the casing 10 and is made of two parts. A first heat-regulation container 160 has a first coupling portion 162 on one end. A second heat-regulation container 160' has a second coupling portion 162' on one end; the dimensions of the coupling portion 162 are such that they correspond exactly with the first coupling portion 162. The structure of the heat-regulation device 60 is therefore created by coupling the first heat-regulation container 160 to the second heat-regulation container 160' by means of the coupling portions 162, 162'.

On the ends of the first coupling portion 162 of the first heat-regulation container 160 there is a first groove housing a first O-ring seal 261. On the opposite end there is a second groove housing a second O-ring seal 263. Also on the second heat-regulation container 160' there is a first groove 260', corresponding to the second coupling portion 162'. This acts as a housing for a first O-ring seal 261'. On the opposite end there is a second groove 262' housing a second O-ring seal 263'.

On said heat-regulation containers 160, 160' there are four openings 264, 264' interposed between said grooves (not illustrated). Openings 264, 264' are positioned so that they are equidistant. The function of the openings 264, 264' is to allow the fluid to be mixed to enter the heat-regulation device 60.

Along the end of the coupling portion 162 of the first heat-regulation container 160 there is a first inner groove 265. On the second heat-regulation container 160' there is a second inner groove 265' on the end opposite the coupling portion 162'. Lastly, there is a third inner groove 265" near the second coupling portion 162'. The position of the third inner groove 265" is such as to be at a separation distance D from the first inner groove 265 when the heat-regulation containers 160, 160' are coupled.

Finally, the heat-regulation containers 160, 160' have four flow channels 266 interposed between the openings 264, 264'. The structure of the flow channels 266 is such that they are operationally connected to the first inner groove 265 and to the third inner groove 265" when the heat-regulation containers 160, 160' are coupled.

The second heat-regulation container 160' also comprises four equidistant spacer elements 960; these elements extend from the portion opposite the second coupling portion 162' to enable coupling of the heat-regulation device 60 with the heat-sensitive element 30, as described below.

The thermostatic valve for mixing fluids 1, according to the invention, also contains a device for balancing the pressures 70 of the fluids to be mixed, housed within the heat-regulation device 60 and in which it can move axially. This pressure balancing device 70 comprises an outer structure 170 on the inside of which is housed a balancing piston 270, which is free to move to equalize the pressures of the inlet fluids. The outer structure 170 is cylindrical in shape and is in two parts. A first balancing compartment 172 has a cylindrical, completely hollow first coupling portion 174 on one end and a cylindrical balancing portion 470 on the opposite end, used for housing the second elastic balancing means 50. This balancing portion 470 has an end portion 472 on which there is a blind hole 474 to enable operational connection with the thermoswitch means 20. The dimension of the end portion 472 is such to allow insertion into the casing 10 and subsequent stopping on the structure of the balancing device 60 at the end of travel. A second balancing compartment 172' has on one end a second coupling portion 174' with dimensions allowing an exact correspondence with the first coupling portion 174. The outer structure 170 is formed by fitting the first balancing compartment 172 into the second balancing compartment 172' by means of the coupling portion 174, 174'. On the balancing compartments 172, 172' there are also inlet openings 176, 176' and outlet openings 178, 178' for the fluids to be mixed. Openings 176, 178 are positioned so as to be specular to openings 176', 178' with reference to the coupling portions 174, 174'. The two balancing compartments 172, 172' are also provided with a first groove 171, 171' and a second groove 173, 173'. These grooves 171, 171', 173, 173' form a seat for housing the respective O-rings 271, 271', 273, 273'. The position of the grooves 171, 171', 173, 173' allows the division of the balancing compartments 172, 172' into two portions in order to separate the inlet openings 176, 176' from the outlet openings 178, 178' when the thermostatic valve for mixing fluids 1 is operational. A first portion for the inlet fluid is interposed between the first groove 171, 171' and the second groove 173, 173'. A second portion for the outlet fluid is interposed between the second groove 173, 173' and the coupling portion 174, 174'.

The coupling portions 174, 174', form a central balancing portion 175, with a radius greater than the balancing compartments 172, 172' and with dimensions such that it can be housed with clearance between the first inner groove 265 and the third inner groove 265" of the heat-regulation device 60. The clearance allows the axial translation of the pressure balancing device 70 within the separation distance D. The difference between the size of the central balancing portion 175 and the separation distance D allows the creation and variation, depending on the pressure conditions of the fluids, of a first drainage hole 179 and a second drainage hole 179' for the fluids to be mixed.

The structure of the pressure balancing device 70 is completed by the housing inside it of a balancing piston 270. The piston comprises a first piston element 272 coupled to a specular second piston element 272'. The piston elements 272, 272' have a hollow cylindrical shape with an irregular radius. A first outer portion 274, 274' and a second inner portion 276, 276', opposite said outer portion 274, 274', have a radius that allows them to slide inside the structure of the pressure balancing device 70 without friction or excessive clearance. On the first outer portion 274, 274' there is a through hole 277, 277', while on the second inner portion 276, 276' there is a blind hole 279, 279'. A third intermediate portion 278, 278' is interposed between the first outer portion 274, 274' and the second inner portion 276, 276' and has a smaller radius. On said third intermediate portion 278, 278' there are two flow openings 300, 300', placed in diametrically opposing positions with respect to the axis of symmetry L of the piston element 272, 272'. The coupling between the two piston elements 272, 272' is formed by means of specular shaped elements 371, 371' placed in complementary positions on the second inner portion 276, 276' and in mutual contact with said piston elements 272, 272'. Said shaped elements 371, 371' are positioned so as to generate a groove 373 for housing a further O-ring seal 375. The shape of the shaped elements 371, 371' is such that it prevents the relative rotary movement of the piston elements 272, 272' around their axis of symmetry when they are coupled. The coupling by means of an O-ring seal 375 also prevents the relative translation movement of said piston elements 272, 272' along their axis of symmetry. The coupling of the two piston elements 272, 272' is such that it only permits the integral movement of the piston 270 for balancing the pressures of the fluids. The shape of the piston elements 272, 272' creates a containment chamber 377, 377' which allows the inlet and outlet of fluid through the flow openings 300, 300'.

The structure of the thermostatic valve for mixing fluids 1 is completed by a first elastic sealing means 40, consisting of a spring, a second elastic balancing means 50, consisting of a spring, a heat-sensitive element 30, provided with a piston 130 on one end, and a containment cup 990. The first elastic sealing means 40 is housed inside the hollow portion 212 of the casing 10. The containment cup 990 is inserted into the first elastic sealing means 40 and acts as a housing for the heat-sensitive element 30. The heat-sensitive element is then inserted by the portion containing the piston 130 into the containment cup 990; the portion opposite said heat-sensitive element 990 is coupled with the four spacer elements 960 of the heat-regulation device 60. Blocking of the heat-sensitive element with the structure of the thermostatic valve for mixing fluids 1 is achieved by coupling means 1000, consisting of two blocking pins, inserted through the openings 310 on the casing 10.

Lastly, the second elastic balancing means 50 is inserted on the outside of the balancing portion 470 until it comes into contact with the end portion 472.

The thermostatic valve for mixing fluids 1, according to the preferred embodiment, is made of a non-toxic material that is resistant to corrosion by the lime present in the fluids.

The thermostatic mixer 100 comprises a metallic structure and a thermostatic valve for mixing fluids 1 as described above. The metallic structure is normally obtained by casting, and is composed of: a first inlet cavity inlet cavity 1100 for the first fluid (cold water), a second inlet cavity 1200 for the second fluid (hot water), and a third outlet cavity 1300 for the mixed fluid. These cavities are operationally connected to the thermostatic valve for mixing fluids 1 by means of a valve chamber, formed by the connecting portion of the three cavities described.

The thermostatic mixer 100 also has a fourth outlet cavity 1400 operationally connected to the third outlet cavity 1300 by means of a connecting through hole 1410. The portion of this hole 1410 found in the fourth cavity 1400 is operationally connected to a means of flow regulation 1500, which allows the user to select the flow rate of the outlet fluid. The thermostatic mixer 100 is completed by a hole 1420 made on the inside of the fourth outlet cavity 1400 from which the mixed liquid comes out to be used.

The thermostatic mixer 100 is connected to the mains water supply and receives the two inlet fluids with different characteristics, hot water and cold water, to be mixed. The inlet cavities 1100, 1200 channel the cold water and the hot water to the first central portion 510 and the second central portion 510' respectively. The two fluids pass through the filtering means 514, 514', placed on the central portions 510, 510', which capture any impurities.

The standard inlet temperature of the two fluids, hot water and cold water, is such that when they are mixed a desired average temperature is obtained, for example 38°C. Under standard conditions, the flow rate of the two inlet fluids is always the same, i.e. the pressures and flow rates of the two fluids, under standard operating conditions, do not experience significant variations.

Under standard fluid inlet conditions and wishing to deliver a mixed fluid at a standard average temperature, the flows of hot and cold water are channelled towards the pressure balancing device 70, enabling two equal flows for mixing to be obtained. The flow of cold water passes through the openings 512 on the casing 10, the openings 264 on the first heat-regulation container 160 and the inlet openings 176 on the first balancing compartment 172. The fluid reaches the balancing piston 270, passing through the flow openings 300 and flooding the containment chamber 377.

Similarly, the flow of hot water passes through the openings 512' on the casing 10, the openings 264' on the second heat-regulation container 160' and the inlet openings 176' on the second balancing compartment 172'. The fluid reaches the balancing piston 270, passing through the flow openings 300' and flooding the containment chamber 377'.

The flooding of the containment chambers 377, 377' allows the fluids to exert a counter-thrust on the walls of the blind holes 279, 279' on the second inner portion 276, 276' of the piston elements 272, 272'. According to Pascal's Law, the pressure exerted by the flow of cold water on the walls of the blind hole 279 is transmitted to all the surfaces operationally connected to it, i.e. it is transmitted to the end wall of the blind hole 279'. Similarly, the pressure exerted by the flow of hot water on the walls of the blind hole 279' is transmitted to all the surfaces operationally connected to it, i.e. it is transmitted to the end wall of the blind hole 279.

Since the containment chambers 377, 377' are the same, if the pressures of the two fluids are equal, the balancing piston 270 will take up an intermediate position. The size of the outlet openings 178, 178' will therefore also be the same, allowing the outlet of the fluids at the same pressure and flow rate.

If the system experiences a drop in the cold water pressure, this pressure will be lower than the pressure of the hot water flow. The pressure balancing device 70 will react by means of the translation of the balancing piston 270 towards the first balancing compartment 172. The thrust that the cold water exerts on the end wall of the blind hole 279 cannot offer sufficient resistance to the thrust exerted by the flow of hot water on the end wall of the blind hole 279'. In this situation, the balancing piston 270 will take up a position in which the size of the inlet holes 176 for the cold water will be larger than the size of the corresponding inlet holes 176' for the hot water. Correspondingly, the size of the outlet holes 178, 178' will also be different; the outlet holes 178 will be smaller than the corresponding outlet holes 178'.

Conversely, if the system experiences a drop in the hot water pressure, this pressure will be lower than the pressure of the cold water flow. The pressure balancing device 70 will react by means of the translation of the balancing piston 270 towards the second balancing compartment 172'. The thrust that the cold water exerts on the end wall of the blind hole 279 overcomes the resistance to the thrust exerted by the flow of hot water on the end wall of the blind hole 279'. In this situation, the balancing piston 270 will take up a position in which the size of the inlet holes 176 for the cold water will be smaller than the size of the corresponding inlet holes 176' for the hot water. Correspondingly, the size of the outlet holes 178, 178' will also be different: the outlet holes 178 will be larger than the corresponding outlet holes 178'. According to the above description, therefore, the pressure balancing device 70 makes it possible to equalise the flow rates of the two fluids before mixing, regardless of the operating conditions of pressure and flow rate of the inlet fluids.

The division of the balancing piston 270 into two piston elements 272, 272' is designed to guarantee, even in the event of small errors of alignment of the various components of the valve, the perfect movement of the valve inside the pressure balancing device 70. Furthermore, the coupling of the two piston elements 272, 272' by means of an O-ring seal 375 enables a watertight seal between the two containment chambers 377, 377', thereby avoiding the premature, inappropriate mixing of the two fluids. Lastly, said seal 375 acts as a stopping element for the translation of the balancing piston 270, thereby limiting wear on the balancing piston 270 and on the structure of the pressure balancing device 70. The reduced wear is determined by the fact that the translation of the balancing piston 270, i.e. the maximum or minimum opening of the holes, will be regulated by the seal 375 and not by the end-of-stroke striking of said piston against the structure.

Upon stabilisation of the fluid flow rates, the fluids, passing through the outlet openings 178, 178' reach the heat-regulation device 60. Flowing from the outlet opening 178, the flow of cold water floods the first inner groove 265. The flow of hot water flows from the outlet opening 178' and proceeds to flood first of all the third inner groove 265" and subsequently the cavities 265'. The operational connection between the cavities 265, 265" allows the two liquids to come into contact and to mix. This mixed liquid flows out through the outflow channels 266 created by said cavities 265, 265" with the second inner groove 265'.

Having passed through the outflow channels 266, the mixed liquid comes into contact with the heat-sensitive element 30, which reacts to the temperature detected by extending or retracting the piston 130.

In conditions where the mixed liquid is requested at a standard average temperature, the heat-sensitive element 30 does not detect any temperature difference and therefore remains unaltered. This allows the heat-regulation device 60 and the pressure balancing device 70 to maintain their position. In this case the liquid drainage holes 179, 179' will be the same size. Using thermoswitch means 20, placed on one end of the thermostatic mixer 100, the user of the device can select the desired temperature for the mixed fluid he or she wishes to use. The action on the thermoswitch means 20 acts directly on the second elastic balancing means 50 and consequently on the entire heat-regulation device 60 assembly.

If a mixed fluid is requested at a temperature higher than the average of the two fluids to be mixed (for example at a temperature of more than 38°C), under standard temperature and flow rate conditions, there will be a translation of the heat-regulation device 60 in the direction of the thermoswitch means 20, by which the user selects the temperature. In this manner, the force ratio exerted by the two elastic means 40, 50 will vary its equilibrium with respect to the intermediate position, resulting in a greater thrust by the first elastic sealing means 40. This will result in a further translation of the pressure balancing device 70; this translation partially closes by a certain amount the drainage hole 179 from which the cold water flows, while at the same time opening by the same amount the drainage hole 179' from which the hot water flows. The same thing happens in the event of a sudden drop in the temperature of one of the fluids, such as to vary the temperature with respect to the selected temperature.

Conversely, a request for a mixed fluid at a temperature below the average of the two fluids to be mixed, under standard temperature and flow rate conditions, will lead to a translation of the heat-regulation device 60 in the direction of the heat-sensitive element 30. In this manner, the force ratio exerted by the two elastic means 40, 50 will vary its equilibrium with respect to the intermediate position, resulting in a greater thrust by the second elastic balancing means 50. This will result in a further translation of the pressure balancing device 70; this translation partially closes by a certain amount the drainage hole 179' from which the hot water flows, while at the same time opening by the same amount the drainage hole 179 from which the cold water flows. The same thing happens in the event of a sudden increase in the temperature of one of the fluids, such as to vary the temperature with respect to the selected temperature. The technical and technological solutions adopted for the thermostatic valve for mixing fluids it to fully achieve its task and pre-set objects. In particular, regulation of the temperature of the mixed fluid is achieved constantly as requested, even in the event of sudden variations in the temperature and pressure characteristics of the inlet fluids. Wear on the valve is minimised thanks to the operational arrangements described above and to the notable decrease in the number of constituent parts. Furthermore, the construction of the valve allows a reduction in the production and assembly costs related to it and to the thermostatic mixer that contains it. The minimisation of wear also relates to the heat-sensitive element: since this is placed near the delivery point and above all inside the valve body, it does not suffer from any loss of memory due to continuous stresses during operation or due to the replacement of the valve.

Lastly, the use of the valve as described enables a minimisation of costs for initial installation or replacement: this is due to the simplicity of inserting the valve into the thermostatic mixer and the complete absence of adjustments to be carried out by the installing engineer.

The thermostatic valve for mixing fluids 1 has a relatively simple structure, which is economical to manufacture using known industrial processes. It is susceptible to numerous modifications and variants, all of which fall within the scope of the invention defined by the claims.

## Claims

1. Thermostatic valve for mixing fluids (1), comprising:
- a casing (10), provided with outlet slots (210) and coupled with thermoswitch means (20);
- a heat-sensitive element (30), provided with a piston (130);
- a first elastic sealing means (40);
- a second elastic balancing means (50);
- a heat-regulation device (60);
whereby;
said casing (10) is a single-piece element;
said heat-sensitive element (30) is housed in said casing (10), in the portion opposite to said thermoswitch means (20);
said first elastic sealing means (40) is interposed between said heat-sensitive element (30) and said casing (10) and
said second elastic balancing means (50) is housed in said casing (10), in the portion opposite to said heat-sensitive element (30),
**characterised in that**, said heat-regulation device (60) is fixedly housed in said casing (10) and
said heat-regulation device (60) is provided with a pressure balancing device (70) and comprises at least two flow chambers (266) for fluids; said flow chambers (266) being placed in diametrically opposed positions with respect to the axis of symmetry (L) of said heat-regulation device (60) and in correspondence with said outlet slots (210) of said casing (10).

2. Thermostatic valve for mixing fluids (1), according to claim 1, **characterised in that** said outlet slots (210) are in the portion of said casing (10) comprising said heat-sensitive element (30) and opposite said thermoswitch means (20).

3. Thermostatic valve for mixing fluids (1), according to claim 1 or 2, **characterised in that** said pressure balancing device (70), housed in said heat-regulation device (60), is formed by means of at least two elements (172, 172') operationally connected by means creating a watertight seal (375).

4. Thermostatic valve for mixing fluids (1), according to claim 3, **characterised in that** said means creating a watertight seal (375) are composed of at least one O-ring seal.

5. Thermostatic valve for mixing fluids (1), according to claim 3 or 4, **characterised in that** said pressure balancing device (70) is operationally connected to said heat-sensitive element (30) by means of the portion opposite said piston (130) of said heat-sensitive element (30).

6. Thermostatic valve for mixing fluids (1), according to one or more of the previous claims, **characterised in that** said casing (10) comprises fluid filtering means (514, 514').

7. Thermostatic valve for mixing fluids (1), according to one or more of the previous claims, **characterised in that** said thermostatic element (30) is coupled to said casing (10) by means of appropriate coupling means (1000).

8. Thermostatic valve for mixing fluids (1), according to claim 7, **characterised in that** said coupling means (1000) are provided with at least one blocking pin.

9. Thermostatic fluid mixer (100), **characterised in that** it comprises a thermostatic valve for mixing fluids (1) according to one or more of the previous claims.

## Patentansprüche

1. Thermostatisches Ventil zum Mischen von Flüssigkeiten (1), aufweisend:
- ein Gehäuse (10), das über Ausgangsöffnungen (210) verfügt und mit einem Wärmeschalter-Mittel (20) verbunden ist;
- ein wärmeempfindliches Element (30), das über einen Kolben (130) verfügt;
- ein erstes elastisches Dichtungsmittel (40);
- ein zweites elastisches Ausgleichsmittel (50);
- eine Wärmeregulierungseinrichtung (60);
wobei das Gehäuse (10) ein einteiliges Element ist;
wobei sich das wärmeempfindliche Element (30) in dem Gehäuse (10) in dem Abschnitt, der dem Wärmeschalter-Mittel (20) gegenüberliegt, befindet;
wobei sich das erste elastische Dichtungsmittel (40) zwischen dem wärmeempfindlichen Element (30) und dem Gehäuse (10) befindet; und
wobei sich das zweite elastische Ausgleichsmittel (50) in dem Gehäuse (10) in dem Abschnitt, der dem wärmeempfindlichen Element (30) gegenüberliegt, befindet, **dadurch gekennzeichnet, dass** die Wärmeregulierungseinrichtung (60) fest in dem Gehäuse (10) untergebracht ist und die Wärmeregulierungseinrichtung (60) über eine Druckausgleichseinrichtung (70) verfügt und zumindest zwei Strömungskammern (266) für Flüssigkeiten aufweist; die Strömungskammern (266) sind an diametral entgegengesetzten Positionen im Verhältnis zu der Symmetrieachse (L) der Wärmeregulierungseinrichtung (60) und in Übereinstimmung mit den Ausgangsöffnungen (210) des Gehäuses (10) plaziert.

2. Thermostatisches Ventil zum Mischen von Flüssigkeiten (1) nach Anspruch 1, **dadurch gekennzeichnet, dass** sich die Ausgangsöffnungen (210) in dem Abschnitt des Gehäuses (10) befinden und das wärmeempfindliche Element (30) und dem entgegengesetzt das Wärmeschalter-Mittel (20) aufweist.

3. Thermostatisches Ventil zum Mischen von Flüssigkeiten (1) nach Anspruch 1 oder 2, **dadurch gekennzeichnet, dass** die Druckausgleichseinrichtung (70), die sich in der Wärmeregulierungseinrichtung (60) befindet, durch mindestens zwei Elemente (172, 172') ausgebildet wird, die operativ durch Mittel verbunden sind, die eine wasserdichte Dichtung (375) schaffen.

4. Thermostatisches Ventil zum Mischen von Flüssigkeiten (1) nach Anspruch 3, **dadurch gekennzeichnet, dass** die Mittel, die eine wasserdichte Dichtung (375) schaffen, aus zumindest einer O-Ring-Dichtung bestehen.

5. Thermostatisches Ventil zum Mischen von Flüssigkeiten (1) nach Anspruch 3 oder 4, **dadurch gekennzeichnet, dass** die Druckausgleichseinrichtung (70) operativ durch den Abschnitt gegenüber dem Kolben (130) des wärmeempfindlichen Elements (30) mit dem wärmeempfindlichen Element (30) verbunden ist.

6. Thermostatisches Ventil zum Mischen von Flüssigkeiten (1) nach einem oder mehreren der vorgenannten Ansprüche, **dadurch gekennzeichnet, dass** das Gehäuse (10) Flüssigkeitsfiltermittel (514, 514') aufweist.

7. Thermostatisches Ventil zum Mischen von Flüssigkeiten (1) nach einem oder mehreren der vorgenannten Ansprüche, **dadurch gekennzeichnet, dass** das thermostatische Element (30) durch entsprechende Verbindungsmittel (1000) mit dem Gehäuse (10) verbunden ist.

8. Thermostatisches Ventil zum Mischen von Flüssigkeiten (1) nach Anspruch 7, **dadurch gekennzeichnet, dass** die Verbindungsmittel (1000) mit mindestens einem Blockierstift versehen sind.

9. Thermostatischer Flüssigkeitsmischer (100), **dadurch gekennzeichnet, dass** er ein thermostatisches Ventil zum Mischen von Flüssigkeiten (1) nach einem oder mehreren der vorgenannten Ansprüche aufweist.

## Revendications

1. Valve thermostatique pour mélanger des fluides (1), comprenant :
- un boîtier (10) prévu avec des fentes de sortie (210) et couplé avec un moyen de thermocontacteur (20) ;
- un élément thermosensible (30) prévu avec un piston (130) ;
- un premier moyen d'étanchéité élastique (40) ;
- un second moyen d'équilibrage élastique (50) ;
- un dispositif de régulation thermique (60) ;
moyennant quoi :
ledit boîtier (10) est un élément d'un seul tenant ;
ledit élément thermosensible (30) est logé dans ledit boîtier (10), dans la partie opposée audit moyen de thermocontacteur (20) ;
ledit premier moyen d'étanchéité élastique (40) est intercalé entre ledit élément thermosensible (30) et ledit boîtier (10), et
ledit second moyen d'équilibrage élastique (50) est logé dans ledit boîtier (10), dans la partie opposée audit élément thermosensible (30),
**caractérisée en ce que**, ledit dispositif de régulation thermique (60) est logé de manière fixe dans ledit boîtier (10), et
ledit dispositif de régulation thermique (60) est prévu avec un dispositif d'équilibrage de pression (70) et comprend au moins deux chambres d'écoulement (266) pour fluides ;
lesdites chambres d'écoulement (266) étant placées dans des positions diamétralement opposées par rapport à l'axe de symétrie (L) dudit dispositif de régulation thermique (60) et en correspondance avec lesdites fentes de sortie (210) dudit boîtier (10).

2. Valve thermostatique pour mélanger des fluides (1), selon la revendication 1, **caractérisée en ce que** lesdites fentes de sortie (210) sont dans la partie dudit boîtier (10) comprenant ledit élément thermosensible (30) et opposées audit moyen de thermocontacteur (20).

3. Valve thermostatique pour mélanger des fluides (1), selon la revendication 1 ou 2, **caractérisée en ce que** le dispositif d'équilibrage de pression (70) logé dans ledit dispositif de régulation thermique (60), est formé au moyen d'au moins deux éléments (172, 172') raccordés de manière opérationnelle par des moyens créant un joint d'étanchéité à l'eau (375).

4. Valve thermostatique pour mélanger des fluides (1), selon la revendication 3, **caractérisée en ce que** lesdits moyens créant un joint d'étanchéité à l'eau (375) sont composés d'au moins un joint torique.

5. Valve thermostatique pour mélanger des fluides (1), selon la revendication 3 ou 4, **caractérisée en ce que** ledit dispositif d'équilibrage de pression (70) est raccordé de manière opérationnelle audit élément thermosensible (30) au moyen de la partie opposée audit piston (130) dudit élément thermosensible (30).

6. Valve thermostatique pour mélanger des fluides (1), selon une ou plusieurs des revendications précédentes, **caractérisée en ce que** ledit boîtier (10) comprend des moyens de filtration de fluide (514, 514').

7. Valve thermostatique pour mélanger des fluides (1), selon une ou plusieurs des revendications précédentes, **caractérisée en ce que** ledit élément thermostatique (30) est couplé audit boîtier (10) au moyen de moyens de couplage (1000) appropriés.

8. Valve thermostatique pour mélanger des fluides (1), selon la revendication 7, **caractérisée en ce que** lesdits moyens de couplage (1000) sont prévus avec au moins une broche de blocage.

9. Mélangeur de fluide thermostatique (100), **caractérisé en ce qu'**il comprend une valve thermostatique pour mélanger des fluide (1) selon une ou plusieurs des revendications précédentes.
